# EUROPEAN PATENT APPLICATION

(11) **EP 4 675 326 A1**
(43) Date of publication of application: **07.01.2026**
(21) Application number: 25185705.8
(22) Date of filing: 26.06.2025
(51) Int. Cl.: G02B 6/44

(54) **PATCH PANEL HAVING MULTIPLE CABLE SPOOLS**

(30) Priority: 01.07.2024 US 202463666443 P
(71) Applicant: GO!FOTON HOLDINGS, INC., Somerset, NJ 08873 (US)
(72) Inventor: TAKEUCHI, Kenichiro, North Brunswick, 08902 (US); CHEN, David Zhi, Dallas, 75230 (US); SHTABNAYA, Alla, Hillsborough, 08844 (US); NAKAGAWA, Haruki, Milford, 08848 (US); ASTORGA, Edwin Magsino, 4026 Santa Rosa City (PH)
(74) Representative: Regimbeau

(57) **Abstract**

A patch panel, including an enclosure having a height dimension, a width dimension, and a depth dimension, the enclosure having at least one front portion, each front portion configured to accommodate a plurality of front side ports, and at least one back portion, each back portion configured to accommodate two or more cable spools and two or more rear side connectors; and two or more cable guides corresponding to respective ones of the rear side connectors, each cable guide configured to route one or more inner cables from the front side ports to the respective rear side connector, wherein for each back portion the at least two or more cable spools are superimposed along the height dimension.

## Description

### CROSS-REFERENCE TO RELATED APPLICATION

The present application claims the benefit of the filing date of U.S. Provisional Patent Application No. 63/666,443, filed on July 1, 2024, the disclosure of which is hereby incorporated herein by reference in its entirety.

### BACKGROUND

Modules such as patch panels are widely used in electronic networks to monitor, interconnect and test circuits. A patch panel generally includes a two-sided array of connection ports that are adapted to receive communication lines, such as fiber optic cables. The connection ports may themselves be two-sided, with a cable inserted on one side of a given connection port being communicatively coupled to a cable inserted on the other side of the same connection port.

Patch panels are often mounted in a rack along with other patch panels. In such configurations, connections between panels may be provided through the use of external cables that are long enough to connect the panels but not so long as to be unwieldly. However, on occasion it may be necessary to connect a patch panel to a distant device, such as another patch panel that is mounted in a remotely positioned rack. Thus, there is a need to store lengths of cable sufficient to provide for any remote panel connections that may become necessary, and a need to manage the long cable runs required for remote panel connections.

### BRIEF SUMMARY

It has been recognized that there is a need to efficiently provide for hard-wired connection of rack-mounted units to distant devices. It has been further recognized that there is a need to provide for hard-wired connections between a rack-mounted device and a multiple of distant devices. In view of the need to efficiently provide for hard-wired connection of rack-mounted units to multiple distant devices, the technology described in this disclosure is provided. According to the invention, there is provided a patch panel as defined in claim 1 and in the corresponding dependent claims.

In accordance with an aspect of the presently disclosed technology, a patch panel is provided, the patch panel including an enclosure having a height dimension, a width dimension, and a depth dimension, the enclosure having at least one front portion, each front portion configured to accommodate a plurality of front side ports, and at least one back portion, each back portion configured to accommodate two or more cable spools and two or more rear side connectors; and two or more cable guides corresponding to respective ones of the rear side connectors, each cable guide configured to route one or more inner cables from the front side ports to the respective rear side connector, wherein for each back portion the at least two or more cable spools are superimposed along the height dimension.

### BRIEF DESCRIPTION OF THE DRAWINGS

The accompanying drawings are not intended to be drawn to scale. Like reference numbers and designations in the various drawings indicate like elements Also, for purposes of clarity not every component may be labeled in every drawing.
Fig. 1 is a plan view of a patch panel of an embodiment.
Fig. 2 is an exploded view of a patch panel of an embodiment, the patch panel accommodating four cable spools.
Fig. 3 shows the patch panel of Fig. 2 as viewed from the rear of the patch panel, looking along the depth dimension from the back of the patch panel to the front of the patch panel.
Fig. 4 is a perspective view of the patch panel of Figs. 2 and 3.

### DETAILED DESCRIPTION

Examples of systems and methods are described herein. It should be understood that the words "example" and "exemplary" are used herein to mean "serving as an example, instance, or illustration." Any embodiment or feature described herein as being an "example" or "exemplary" is not necessarily to be construed as preferred or advantageous over other embodiments or features. In the following description, reference is made to the accompanying figures, which form a part thereof. In the figures, similar symbols typically identify similar components, unless context dictates otherwise. Other embodiments may be utilized, and other changes may be made, without departing from the scope of the subject matter presented herein.

The example embodiments described herein are not meant to be limiting. It will be readily understood that the aspects of the present disclosure, as generally described herein, and illustrated in the figures, can be arranged, substituted, combined, separated, and designed in a wide variety of different configurations, all of which are explicitly contemplated herein.

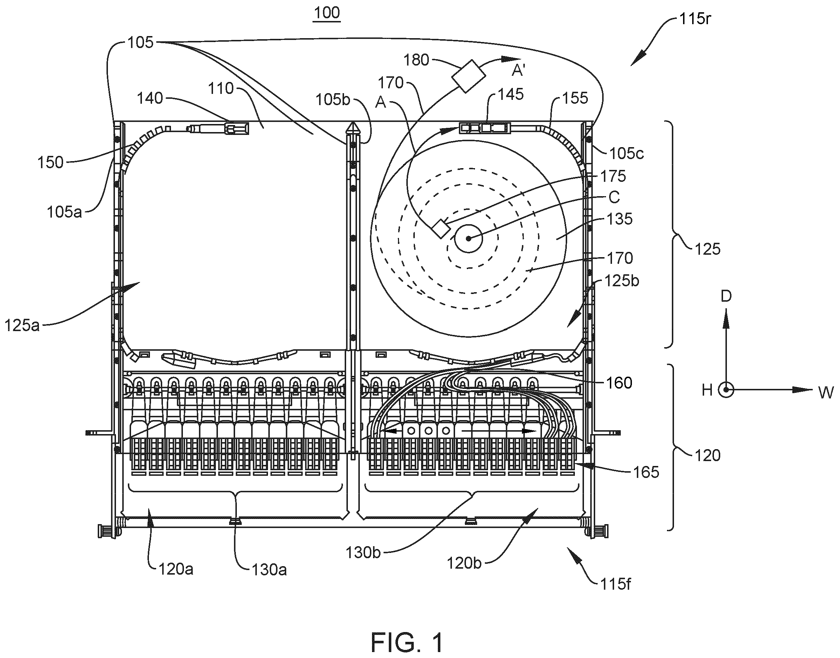

Fig. 1 is a plan view of a patch panel 100 of an embodiment. As can be seen from Fig. 1, the patch panel 100 includes an enclosure 105 extending in a height dimension (indicated by H in the depicted reference frame), a width dimension (indicated by W in the depicted reference frame), and a depth dimension (indicated by D in the depicted reference frame). More specifically, the enclosure 105 includes a first outer wall 105a, an internal enclosure wall 105b, a second outer wall 105c, a cover (not shown), and a base 110. The base 110 may be generally planer and extending in the W dimension from the first outer wall 105a of the enclosure 105 to the second outer wall 105c of the enclosure 105 and in the D dimension from a front side 115f of the enclosure 105 to a rear side 115r of the enclosure 105. The cover may be generally planar, aligned with the base 110 in the in the D and W dimensions, and spaced from the base 110 in the H dimension. The first outer wall 105a, internal enclosure wall 105b, and second outer wall 105c are positioned between the base 110 and the cover and contacted by the base 110 and the cover such that the base 110, cover, first outer wall 105a and second outer wall 105c define outer boundaries of the patch panel 100.

It should be noted that in some embodiments the base 110 and/or cover may not extend from the front side 115f of the enclosure 105 to the rear side 115r of the enclosure 105. In one example, the base 110 extends past the front side 115f of the enclosure 105 and/or past the rear side 115r of the enclosure 105 for purposes of supporting cables near the patch panel 100. In another example, a portion of the cover is slidable along the D dimension toward the rear side 115r of the enclosure 105, for purposes of facilitating access to components within the enclosure 105, thereby allowing the cover to extend less than the full distance between the front side 115f of the enclosure 105 and the rear side 115r of the enclosure 105.

In any event, the patch panel 100 may have a one rack unit size. A rack unit (RU) is typically defined as 1.75 inches (2.54 cm) of H dimension space. Moreover, a 1 (one) RU patch panel typically occupies 1.75 inches (2.54 cm) of H dimension by 19 inches (48.26 cm), or about 19 inches (48.26 cm), of W dimension, or 1.75 inches (2.54 cm) of H dimension by 23 inches (58.42 cm), or about 23 inches (58.42 cm), of W dimension, although a 1 RU patch panel may occupy other dimensions. The patch panel 100 may have a 1 RU size in the H dimension and W dimension. That is, the patch panel 100 may extend 1.75 inches (2.54 cm) in the H dimension and 19 inches (48.26 cm), or about 19 inches (48.26 cm), in the W dimension. In another embodiment, the patch panel 100 may extend 1.75 inches (2.54 cm) in the H dimension and 23 inches (58.42 cm), or about 23 inches (58.42 cm), in the W dimension.

As can be further seen from Fig. 1, the patch panel 100 includes one or more front portions 120 and one or more back portions 125. In the Fig. 1 configuration, the patch panel 100 includes a first front portion 120a, a first back portion 125a, an second front portion 120b, and a second back portion 125b, the first front portion 120a and the first back portion 125a being separated from the second front portion 120b and the second back portion 125b by the internal enclosure wall 105b. However, the Fig. 1 configuration is merely illustrative. The patch panel 100 may not include the internal enclosure wall 105b and thus have a single front portion 120 and a single back portion 125. Alternatively, the patch panel may include one or more internal enclosure walls in addition to internal enclosure wall 105b and thus have more than two front portions 120 and more than two back portions 125. Regardless of the number of front portions 120 and the number of back portions 125, each front portion 120 is configured to accommodate a plurality of front side ports, and each back portion 125 is configured to accommodate two or more cable spools and two or more rear side connectors.

In the Fig. 1 depiction, a first plurality of front side ports 130a is shown positioned in first front portion 120a and a second plurality of front side ports 130b is shown positioned in the second front portion 120b. A cable spool 135 is shown positioned in back portion 125b. Only a single cable spool is shown for purposes of clarity of presentation. However it is noted that patch panel 100 is configured to accommodate two or more cable spools in each of back portions 125a and 125b, and that in the two or more cable spools may be stacked along the H dimension such that they appear superimposed on one another when viewed along the H dimension. Similarly, while each of back portions 125a and 125b is configured to accommodate two or more rear side connectors, Fig. 1 depicts only a first rear side connector 140, accommodated within first back portion 125a, and a second rear side connector 145 accommodated within the second back portion 125b. Still further, the patch panel 100 may be configured to accommodate two or more cable guides per back portion 125, each cable guide functioning to guide cables from a front portion 120 of the patch panel 100 to a back portion 125 of patch panel 100, although for clarity of presentation Fig. 1 depicts only two such cable guides, a first cable guide 150 and a second cable guide 155. The first cable guide 150 may be positioned in a cavity within the first outer wall 105a so as to maximize the amount of space available for cable spools in the back portion 125a while still allowing the patch panel 100 to have a 1RU size. Similarly, the second cable guide 155 may be positioned in a cavity within the second outer wall 105c.

The patch panel 100 may further include a plurality of inner cables 160. The inner cables 160 may be fiber optic cables and may, for example, couple to the second plurality of front side ports 130b via respective connectors (e.g., connector 165). The inner cables 160 may be routed to the second rear side connector 145 via the second cable guide 155. In this manner, a communicative coupling may be formed between the second plurality of front side ports 130b and the second rear side connector 145. Moreover, the patch panel may include another plurality of inner cables (not shown) that are coupled to the first plurality of front side ports 130a via respective connectors (not shown), the another plurality of inner cables may be routed to the first rear side connector 140 via the first cable guide 150.

Regarding the cable spool 135, is it rotatably accommodated in the back portion 125b of the patch panel 100. The cable spool 135 has circular flanges concentric with a circular drum, is accommodated in the back portion 125b such that he flanges lie in, or parallel to, the W-D plane, and is accommodated in the back portion 125b such that the flanges and drum rotate about an axis (indicated by C) running through the center of the flanges and drum. The cable spool 135 may have a cable assembly 170 wound about the drum. The cable assembly 170 may be a fiber optic cable assembly and may include an inner connector 175 configured to mate with the second rear side connector 145 (as represented by arrow A), and an outer connector 180 configured to mate with a connector on a distant device (as represented by arrow A'). Nevertheless, it is noted that as an alternative to cable assembly 170, the cable spool 135 may be wound with a cable having only one connector, or no connectors. For example, a cable assembly wound about the drum of cable spool 135 may include only a single connector (e.g., inner connector 175), so that the other end of the cable assembly may be fitted with a connector as dictated by an application that is determined at a later time.

In an illustrative application of the patch panel 100, the second plurality of front side ports 130b may be communicatively coupled to a distant device. Such coupling is realized by (i) connection of the second plurality of front side ports 130b to the inner cables 160, (ii) connection of the inner cables 160 to the second rear side connector 145, with routing via the second cable guide 155, (iii) connection of the second rear side connector 145 to the inner connector 175, and (iv) connection of the outer connector 180 to the distant device. When connections (i) to (iv) are made, with the cable assembly 170 unwound from the cable spool 135, a signal communicated to one of the second plurality of front side ports 130b is communicable to the distant device via the combination of the inner cables 160, the second rear side connector 145, and the cable assembly 170.

In any event, it should be noted that the one or more other cable spools accommodated in the back portion 125b with cable spool 135 may be configured like cable spool 135 and accommodated within the back portion 125b like cable spool 135, with the exception that the one or more other cable spools will be spaced from cable spool 135 in the H dimension, and spaced from each other in the H dimension.

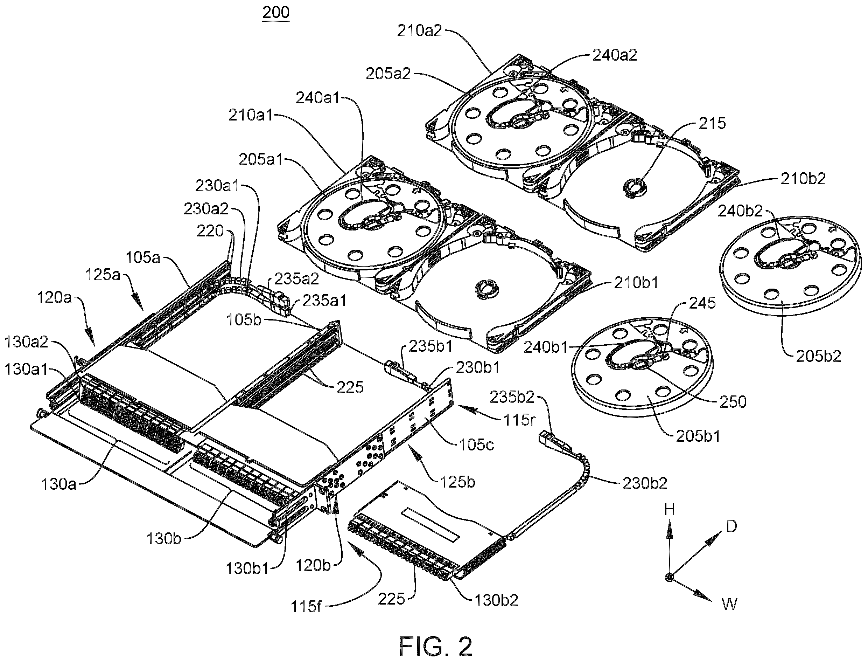

Turning now to Fig. 2, the figure shows an exploded view of a patch panel 200 configured with four cable spools 205a1, 205a2, 205b1, and 205b2. As can be seen from Fig. 2, the cable spools 205a1, 205a2, 205b1, and 205b2 are respectively accommodated within spool cassettes 210a1, 210a2, 210b1, and 210b2. Moreover, each of the cable spools 205a1, 205a2, 205b1, and 205b2 may rotate within its corresponding spool cassette 210a1, 210a2, 210b1, and 210b2. For example, cable spool 205b2 may rotate about ring 215 of spool cassette 210b2. As further illustrated in Fig. 2, the first outer wall 105a, the inner enclosure wall 105b, and the second outer wall 105c include rails (e.g., rails 220 of first outer wall 105a, and rails 225 of inner enclosure wall 105b). The rails are configured to engage the spool cassettes 210a1, 210a2, 210b1, and 210b2 such that each of the spool cassettes 210a1, 210a2, 210b1, and 210b2 is fixedly secured along the H dimension and along the W dimension but is slidable along the D dimension. When spool cassettes 210a1 and 210a2 are positioned within first back portion 125a and slid toward the first front portion 120a, the spool cassettes 210a1 and 210a2, and their respective cable spools 205a1 and 205a2 are stacked (or "superimposed") over each other along the H dimension. Likewise, when spool cassettes 210b1 and 210b2 are positioned within second back portion 125b and slid toward the second front portion 120b, the spool cassettes 210b1 and 210b2, and their respective cable spools 205b1 and 205b2 are stacked (or "superimposed") over each other along the H dimension.

As can be further seen from Fig. 2, each of the first plurality of front side ports 130a and the second plurality of front side ports 130b may be made up of two groups of front side ports. That is, the first plurality of front side ports 130a may be made up of a first group of first front side ports 130a1 and a second group of first front side ports 130a2; and the second plurality of front side ports 130b may be made up of a first group of second front side ports 130b1 and a second group of second front side ports 130b2. Each of the groups of front side ports 130a1, 130a2, 130b1, and 130b2 includes twelve duplex adaptors (e.g., adapter 225), although it is not necessary for each of the groups of front side ports 130a1, 130a2, 130b1, and 130b2 to be formed of twelve duplex adaptors. The number of adaptors included in each of the groups of front side ports 130a1, 130a2, 130b1, and 130b2 is not restricted to twelve, and the type of adaptors employed in each of the groups of front side ports 130a1, 130a2, 130b1, and 130b2 is not restricted to duplex adaptors. The wide range of applicable configurations for the front side ports will be readily appreciated by one skilled in the art upon viewing the present disclosure.

In any case, for each of the groups of front side ports 130a1, 130a2, 130b1, and 130b2 the patch panel 200 includes respective cable guides 230a1, 230a2, 230b1, and 230b2. The cable guides 230a1, 230a2, 230b1, and 230b2 are, in turn, coupled to respective rear side connectors 235a1, 235a2, 235b1, and 235b2. The cable guides 230a1, 230a2, 230b1, and 230b2 may be used to guide inner cables (not shown) from respective ones of the groups of front side ports 130a1, 130a2, 130b1, and 130b2 to respective ones of the rear side connectors 235a1, 235a2, 235b1, and 235b2. In this manner, each of the groups of front side ports 130a1, 130a2, 130b1, and 130b2 is communicatively coupled to a respective one of the rear side connectors 235a1, 235a2, 235b1, and 235b2. Further, as can be seen from Fig. 2, the cable guides 230a1, 230a2, 230b1, and 230b2 and rear side connectors 235a1, 235a2, 235b1, and 235b2 may be positioned in the back portions 125a and 125b of the patch panel 200 but are not part of the cable spools 205a1, 205a2, 205b1, and 205b2 or spool cassettes 210a1, 210a2, 210b1, and 210b2.

The patch panel 200 additionally includes cable assemblies 240a1, 240a2, 240b1, and 240b2. The cable assemblies 240a1, 240a2, 240b1, and 240b2 may be fiber optic cable assemblies and are respectively associated with cable spools 205a1, 205a2, 205b1, and 205b2. The cable assemblies 240a1, 240a2, 240b1, and 240b2 are each shown in a state of being fully wound on a respective one of cable spools 205a1, 205a2, 205b1, and 205b2. Each of the cable assemblies 240a1, 240a2, 240b1, and 240b2 may be unwound for connection to a near or distant device. Further, the cable assemblies 240a1, 240a2, 240b1, and 240b2 may include respective inner connectors (e.g., inner connector 245) which may be configured for connection to respective ones of rear side connectors 235a1, 235a2, 235b1, and 235b2. For example, inner connector 245 may be configured for connection to rear side connector 235b1. Also,, each of the inner connectors (e.g., inner connector 245) may be accommodated within an inner connector space (e.g., inner connector space 250) of a respective one of the cable spools 205a1, 205a2, 205b1, and 205b2 (e.g., cable spool 205b1) such that the cable spool is free to rotate while the inner connector is positioned in the inner connector space and such that the inner connector can be removed from the inner connector space - the removal being possible when the corresponding cable assembly is wound on the cable spool, when the corresponding cable assembly is partially wound on the cable spool, or when the corresponding cable assembly is unwound from the cable spool. In any event, the inner connectors (e.g., inner connector 245) may be removed from the inner space (e.g., inner space 250) and coupled to the corresponding rear side connector (e.g., rear side connector 235b1). In some embodiments, the inner connectors (e.g., inner connector 245) are male multi-fiber push on (MPO) connectors and the rear side connectors (e.g.., rear side connector 235b1) are female MPO connectors.

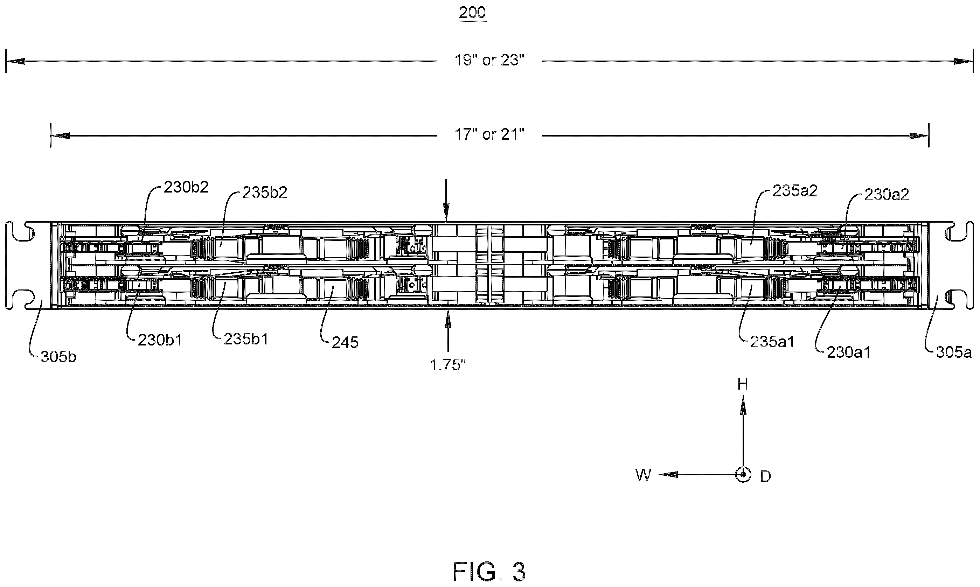

Referring now to Fig. 3, the figure shows the patch panel 200 of Fig. 2 as viewed from the rear, looking along the D dimension from the back of the patch panel 200 to the front of the patch panel 200. Clearly visible in Fig. 3 are the cable guides 230a1, 230a2, 230b1, and 230b2; and the rear side connectors 235a1, 235a2, 235b1, and 235b2. The rear side connectors 235a1, 235a2, 235b1, and 235b2 are shown coupled to respective ones of the inner connectors, e.g., rear side connector 235b1 is shown coupled to inner connector 245. Also clearly visible in Fig. 3 are mounting brackets 305a and 305b, which may be used to mount the patch panel 200 within a rack frame. Not clearly visible in Fig. 3 are the cable spools 205a1, 205a2, 205b1, and 205b2 and the spool cassettes 210a1, 210a2, 210b1, and 210b2. Nevertheless, cable spool 205a1 and spool cassette 210a1 are positioned behind rear side connector 235a1, cable spool 205a2 and spool cassette 210a2 are positioned behind rear side connector 235a2, cable spool 205b1 and spool cassette 210b1 are positioned behind rear side connector 235b1, and cable spool 205b2 and spool cassette 210b2 are positioned behind rear side connector 235b2.

As can be seen from Fig. 3, the patch panel 200 has a one rack unit size. That is, the patch panel 200 may extend 1.75 inches (2.54 cm) in the H dimension and substantially 19 inches (48.26 cm) in the W dimension; or may extend 1.75 inches (2.54 cm) in the H dimension and substantially 23 inches (58.42 cm) in the W dimension. As can be further seen from Fig. 3, the W dimension extents of 19 inches (48.26 cm) and 23 inches (58.42 cm) are extents that include the mounting brackets 305a and 305b. The W dimension extents without the mounting brackets 305a and 305b are respectively substantially 17 inches (43.18 cm) and substantially 21 inches (53.34 cm).

It should be noted that the cable guides 230a1, 230a2, 230b1, and 230b2 are long enough to extend behind the respective cable spools 205a1, 205a2, 205b1, and 205b2 when the patch panel 200 is viewed along the D dimension from front to back. Further, the cable guides 230a1, 230a2, 230b1, and 230b2 are flexible. With such length and flexibility the cable guides, and their associated rear side connectors 235a1, 235a2, 235b1, and 235b2, are conveniently accessible from the rear side 115r of the patch panel 200. The cable guides 230a1, 230a2, 230b1, and 230b2 may be extended away from the rear side 115r of the patch panel 200 - along the D dimension and away from the front side 115f - to facilitate connection of the rear side connectors 235a1, 235a2, 235b1, and 235b2 to respective inner connectors (e.g., inner connector 245). Moreover, prior to connecting the rear side connectors 235a1, 235a2, 235b1, and 235b2 to respective inner connectors, or after such connections, the rear side connectors 235a1, 235a2, 235b1, and 235b2 and the cable guides 230a1, 230a2, 230b1, and 230b2 may be urged toward the rear side 115r so that the rear side connectors 235a1, 235a2, 235b1, and 235b2 and the cable guides 230a1, 230a2, 230b1, and 230b2 may be stowed in the back portions 125a and 125b of the patch panel 200. Thereby, minimizing the D dimension extent of the patch panel 200.

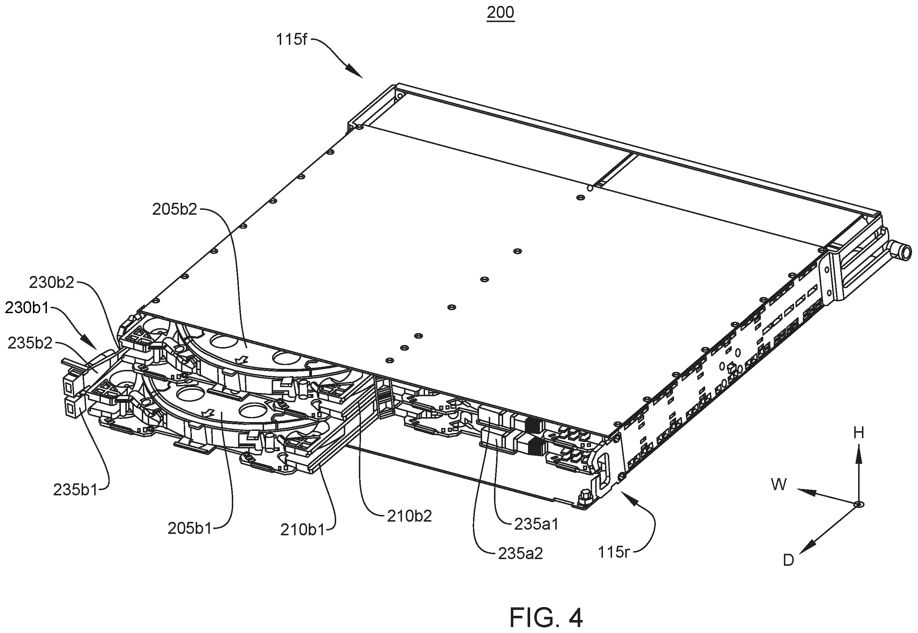

Fig. 4 is a perspective view of the patch panel 200. In Fig. 4, clearly visible is the stacked arrangement in the H dimension of the cable spools 205b1 and 205b2 and their respective spool cassettes 210b1 and 201b2. More specifically, in Fig. 4 the spool cassettes 210b1 and 210b2 have been slid along the D dimension in a direction from the front side 115f of the patch panel 200 to the rear side 115r of the patch panel 200, with spool cassette 210b1 slid farther than spool cassette 210b2. As can be further seen from Fig. 4, the cable guides 230b1 and 230b2, and their respective rear side connectors 235b1 and 235b2, are moved away from the rear side 115r of the patch panel 200 so as to allow for unobstructed sliding movement of the spool cassettes 210b1 and 210b2.

Numbered examples of the present technology include, but are not restricted to, the following.
(1) A patch panel, including an enclosure having a height dimension, a width dimension, and a depth dimension, the enclosure having at least one front portion, each front portion configured to accommodate a plurality of front side ports, and at least one back portion, each back portion configured to accommodate two or more cable spools and two or more rear side connectors; and two or more cable guides corresponding to respective ones of the rear side connectors, each cable guide configured to route one or more inner cables from the front side ports to the respective rear side connector, wherein for each back portion the at least two or more cable spools are superimposed along the height dimension.
(2) The patch panel according to (1), wherein the patch panel has a 1 rack unit (RU) size in the height dimension and width dimension.
(3) The patch panel according to (2), wherein the patch panel extends 1.75 inches (2.54 cm) in the height dimension and 19 inches (48.26 cm) in the width dimension.
(4) The patch panel according to (2), wherein the patch panel extends 1.75 inches (2.54 cm) in the height dimension and 23 inches (58.42 cm) in the width dimension.
(5) The patch panel according to (1), further including, for each back portion, two or more spool cassettes for respective ones of the two or more cable spools, the two or more spool cassettes arranged in the back portion, and each of the two or more spool cassettes accommodating the respective cable spool for rotation within the spool cassette.
(6) The patch panel according to (5), wherein each back portion includes rails for engaging the two or more spool cassettes such that each of the two or more spool cassettes is fixedly secured along the height dimension and along the width dimension but is slidable along the depth dimension.
(7) The patch panel according to (1), further including, for each back portion, two or more cable assemblies for respective ones of the two or more cable spools, each of the two or more cable assemblies having a cable and an inner connector configured to mate with one of the rear side connectors.
(8) The patch panel according to (7), wherein, for each back portion, each of the two or more cable spools includes an inner connector space for accommodating the inner connector of the corresponding cable assembly such that the cable spool is free to rotate while the inner connector is positioned in the inner connector space and such that the inner connector can be removed from the inner connector space when the cable assembly is wound on the cable spool.
(9) The patch panel according to (1), further including the one or more inner cables.
(10) The patch panel according to (9), further including one or more inner cable connectors for respective ones of the inner cables, each inner cable connector configured to connect a first end of the corresponding inner cable to one of the front side ports.
(11) The patch panel according to (10), wherein for each of the inner cables, a second end of the inner cable is coupled to one of the rear side connectors.
(12) The patch panel according to (1), wherein the rear side connectors are multi-fiber push on (MPO) connectors.
(13) The patch panel according to (1), wherein the enclosure includes a first front portion, a second front portion, a first back portion, and a second back portion, the first front portion and the first back portion being separated from the second front portion and the second back portion by an internal enclosure wall that extends along the depth dimension, the first front portion is configured to accommodate a first plurality of front side ports, the second front portion is configured to accommodate a second plurality of front side ports, the first back portion is configured to accommodate a first two cable spools and a first two rear sider connectors, and the second back portion is configured to accommodate a second two cable spools and a second two rear side connectors, and the first two cable spools are superimposed along the height dimension, and the second two cable spools are superimposed along the height dimension.
(14) The patch panel according to (13), further including a first two spool cassettes for respective ones of the first two cable spools, the first two spool cassettes arranged in the first back portion, and each of the first two spool cassettes accommodating a respective one of the first two cable spools for rotation within the spool cassette; and a second two spool cassettes for respective ones of the second two cable spools, the second two spool cassettes arranged in the second back portion, and each of the second two spool cassettes accommodating a respective one of the second two cable spools for rotation within the spool cassette.
(15) The patch panel according to (14), wherein the enclosure includes a first outer wall extending in the depth direction and a second outer wall extending in the depth direction, the first outer wall and the internal enclosure wall each have rails for engaging the first two spool cassettes such that each of the first two spool cassettes is fixedly secured along the height dimension and along the width dimension but is slidable along the depth dimension, and the second outer wall and the internal enclosure wall each have rails for engaging the second two spool cassettes such that each of the second two spool cassettes is fixedly secured along the height dimension and along the width dimension but is slidable along the depth dimension.
(16) The patch panel according to (13), further including first two cable assemblies for respective ones of the first two cable spools; and second two cable assemblies for respective ones of the second two cable spools, wherein each of the first two cable assemblies and each of the second two cable assemblies has a cable and an inner connector configured to mate with the corresponding one of the first two rear side connectors or the second two rear side connectors.
(17) The patch panel according to (16), wherein each of the first two cable spools and the second two cable spools includes an inner connector space for accommodating the inner connector of the corresponding one of the first two cable assemblies or second two cable assemblies such that the cable spool is free to rotate while the inner connector is positioned in the inner connector space and such that the inner connector can be removed from the inner connector space when the corresponding cable assembly is wound on the cable spool.
(18) The patch panel according to (13), further including the one or more inner cables.

Although the invention herein has been described with reference to particular embodiments, it is to be understood that these embodiments are merely illustrative of the principles and applications of the present invention. It is therefore to be understood that numerous modifications may be made to the illustrative embodiments and that other arrangements may be devised without departing from the scope of the present invention as defined by the appended claims.

## Claims

1. A patch panel, comprising:
an enclosure having a height dimension, a width dimension, and a depth dimension, the enclosure having at least one front portion, each front portion configured to accommodate a plurality of front side ports, and at least one back portion, each back portion configured to accommodate two or more cable spools and two or more rear side connectors; and
two or more cable guides corresponding to respective ones of the rear side connectors, each cable guide configured to route one or more inner cables from the front side ports to the respective rear side connector,
wherein for each back portion the at least two or more cable spools are superimposed along the height dimension.

2. The patch panel according to claim 1, wherein the patch panel has a 1 rack unit (RU) size in the height dimension and width dimension.

3. The patch panel according to claim 2, wherein the patch panel extends 2.54 cm (1.75 inches) in the height dimension and 48.26 cm (19 inches) in the width dimension, or
wherein the patch panel extends 2.54 cm (1.75 inches) in the height dimension and 58.42 cm (23 inches) in the width dimension.

4. The patch panel according to any one of claims 1 to 3, further comprising, for each back portion, two or more spool cassettes for respective ones of the two or more cable spools, the two or more spool cassettes arranged in the back portion, and each of the two or more spool cassettes accommodating the respective cable spool for rotation within the spool cassette.

5. The patch panel according to claim 4, wherein each back portion comprises rails for engaging the two or more spool cassettes such that each of the two or more spool cassettes is fixedly secured along the height dimension and along the width dimension but is slidable along the depth dimension.

6. The patch panel according to any one of claims 1 to 5, further comprising, for each back portion, two or more cable assemblies for respective ones of the two or more cable spools, each of the two or more cable assemblies comprising a cable and an inner connector configured to mate with one of the rear side connectors.

7. The patch panel according to claim 6, wherein, for each back portion, each of the two or more cable spools comprises an inner connector space for accommodating the inner connector of the corresponding cable assembly such that the cable spool is free to rotate while the inner connector is positioned in the inner connector space and such that the inner connector can be removed from the inner connector space when the cable assembly is wound on the cable spool.

8. The patch panel according to any one of claims 1 to 7, further comprising the one or more inner cables.

9. The patch panel according to claim 8, further comprising one or more inner cable connectors for respective ones of the inner cables, each inner cable connector configured to connect a first end of the corresponding inner cable to one of the front side ports,
and preferably wherein for each of the inner cables, a second end of the inner cable is coupled to one of the rear side connectors.

10. The patch panel according to any one of claims 1 to 9, wherein the rear side connectors are multi-fiber push on (MPO) connectors.

11. The patch panel according to any one of claims 1 to 10, wherein
the enclosure comprises a first front portion, a second front portion, a first back portion, and a second back portion, the first front portion and the first back portion being separated from the second front portion and the second back portion by an internal enclosure wall that extends along the depth dimension,
the first front portion is configured to accommodate a first plurality of front side ports, the second front portion is configured to accommodate a second plurality of front side ports,
the first back portion is configured to accommodate a first two cable spools and a first two rear sider connectors, and the second back portion is configured to accommodate a second two cable spools and a second two rear side connectors, and
the first two cable spools are superimposed along the height dimension, and the second two cable spools are superimposed along the height dimension.

12. The patch panel according to claim 11, further comprising:
a first two spool cassettes for respective ones of the first two cable spools, the first two spool cassettes arranged in the first back portion, and each of the first two spool cassettes accommodating a respective one of the first two cable spools for rotation within the spool cassette; and
a second two spool cassettes for respective ones of the second two cable spools, the second two spool cassettes arranged in the second back portion, and each of the second two spool cassettes accommodating a respective one of the second two cable spools for rotation within the spool cassette.

13. The patch panel according to claim 12, wherein
the enclosure comprises a first outer wall extending in the depth direction and a second outer wall extending in the depth direction,
the first outer wall and the internal enclosure wall each comprise rails for engaging the first two spool cassettes such that each of the first two spool cassettes is fixedly secured along the height dimension and along the width dimension but is slidable along the depth dimension, and
the second outer wall and the internal enclosure wall each comprise rails for engaging the second two spool cassettes such that each of the second two spool cassettes is fixedly secured along the height dimension and along the width dimension but is slidable along the depth dimension.

14. The patch panel according to any one of claims 10 to 13, further comprising:
first two cable assemblies for respective ones of the first two cable spools; and
second two cable assemblies for respective ones of the second two cable spools,
wherein each of the first two cable assemblies and each of the second two cable assemblies comprises a cable and an inner connector configured to mate with the corresponding one of the first two rear side connectors or the second two rear side connectors.

15. The patch panel according to claim 14, wherein each of the first two cable spools and the second two cable spools comprises an inner connector space for accommodating the inner connector of the corresponding one of the first two cable assemblies or second two cable assemblies such that the cable spool is free to rotate while the inner connector is positioned in the inner connector space and such that the inner connector can be removed from the inner connector space when the corresponding cable assembly is wound on the cable spool.
